Europäisches Patentamt

European Patent Office

Office européen des brevets

(11) Numéro de publication: **0 292 353 B1**

## FASCICULE DE BREVET EUROPEEN

(45) Date de publication de fascicule du brevet: **09.12.92** (51) Int. Cl.⁵: **G02F 1/29**

(21) Numéro de dépôt: **88401109.9**

(22) Date de dépôt: **06.05.88**

(54) **Dispositif de contrôle d'un faisceau lumineux dans un grand champ angulaire, et application à un dispositif de détection.**

(30) Priorité: **19.05.87 FR 8706991**

(43) Date de publication de la demande:
**23.11.88 Bulletin 88/47**

(45) Mention de la délivrance du brevet:
**09.12.92 Bulletin 92/50**

(84) Etats contractants désignés:
**DE GB IT NL SE**

(56) Documents cités:
FR-A- 2 041 059          FR-A- 2 243 573
FR-A- 2 303 433          US-A- 3 703 328
US-A- 3 976 873          US-A- 4 309 602
US-A- 4 447 149

ELECTRONICS INTERNATIONAL, vol. 42, no.
11, 26 mai 1969, pages 54-56, A. McGraw-Hill
Publications: "Sounding a light note"

IEEE JOURNAL OF OUANTUM ELECTRONICS,
vol. OE-22, no. 8, août 1986, pages 1493-1502,
IEEE, New York, US; T. TSCHUDI et al.:
"Image amplification by two- and four-wave
mixing in BaTiO3 photorefractive crystals"

(73) Titulaire: **THOMSON-CSF**
**51, Esplanade du Général de Gaulle**
**F-92800 Puteaux(FR)**

(72) Inventeur: **Huignard, Jean-Pierre**
**THOMSON-CSF SCPI 19, avenue de Messine**
**F-75008 Paris(FR)**
Inventeur: **Meyzonnette, Jean-Louis**
**THOMSON-CSF SCPI 19, avenue de Messine**
**F-75008 Paris(FR)**

(74) Mandataire: **Grynwald, Albert et al**
**THOMSON-CSF SCPI**
**F-92045 PARIS LA DEFENSE CEDEX 67(FR)**

## Description

L'invention concerne un dispositif de contrôle de la direction angulaire d'un faisceau laser et notamment un dispositif d'orientation d'un faisceau lumineux dans un grand champ angulaire. De plus, l'invention prévoit d'assurer une amplification de l'onde désirée à l'aide d'un milieu non linéaire. Pour chaque direction de déflexion, la surface d'onde peut être corrigée des distorsions de phase induites par la turbulence atmosphérique ou par les aberrations géométriques des composants optiques.

Le contrôle de la direction angulaire de faisceaux lasers de très grands diamètres atteignant de 1 à 10 cm, par exemple, constitue une fonction importante des dispositifs lasers de puissance fonctionnant en mode continu ou pulsé et appliqués à la désignation et à la poursuite d'objets en mouvement.

Les systèmes connus ne permettent pas d'obtenir des déflexions angulaires importantes d'un faisceau.

L'invention concerne un dispositif de déflexion angulaire d'un faisceau dans un grand champ angulaire pouvant atteindre ± 60°. Un dispositif de contrôle de la direction d'un faisceau laser comportant les éléments indiqués dans le préambule de la revendication 1 est divulgué dans le document FR-A-2 049 059.

L'invention concerne donc un dispositif de contrôle de la direction d'un premier faisceau lumineux émis par une source laser comportant les différents éléments successifs suivants, alignés selon la direction de ce premier faisceau lumineux :

- un dispositif de déflexion commandé à faible déviation recevant le premier faisceau lumineux et transmettent un deuxième faisceau selon une deuxième direction choisie parmi plusieurs directions faisant un angle par rapport à la direction du premier faisceau ;
- un multiplexeur holographique comportant un élément optique holographique générant plusieurs troisièmes faisceaux à partir d'un faisceau selon ladite deuxième direction, dont les directions sont fonction de ladite deuxième direction ;
caractérisé en ce qu il comportant également :
- des obturateurs, à ouverture-fermeture commandée, placés chacun sur une direction possible desdits troisièmes faisceaux et permettant de choisir la transmission d'un ou plusieurs troisièmes faisceaux déterminés.

L'invention concerne également un dispositif de détection appliquant le dispositif de contrôle précédent, caractérisé en ce qu'un dispositif de détection optoélectronique est couplé au faisceau pompe par une lame semi-réfléchissante de façon à recevoir un faisceau lumineux de détection provenant de l'extérieur du dispositif.

Les différents objets et caractéristiques de l'invention apparaîtront plus clairement dans la description qui va suivre faite en se reportant aux figures annexées qui représentent :

- la figure 1, un exemple de réalisation d'un dispositif de déflexion selon l'invention ;
- la figure 2, un exemple de réalisation plus complet du dispositif de la figure 1 ;
- la figure 3, une variante de réalisation du dispositif de déviation de la figure 2 ;
- la figure 4, un exemple de réalisation du dispositif d'obturateurs du dispositif de déflexion selon l'invention ;
- la figure 5, un exemple de réalisation du correcteur de phase du dispositif de la figure 2 ;
- la figure 6, un exemple de réalisation du dispositif d'amplification de la figure 2 ;
- la figure 7, un exemple de réalisation du multiplexeur holographique de la figure 2 ;
- les figures 8 et 9, des exemples de fonctionnement du dispositif de déflexion selon l'invention ;
- les figures 10 et 11, des exemples de réalisation d'un dispositif de détection optique à grand champ angulaire ;

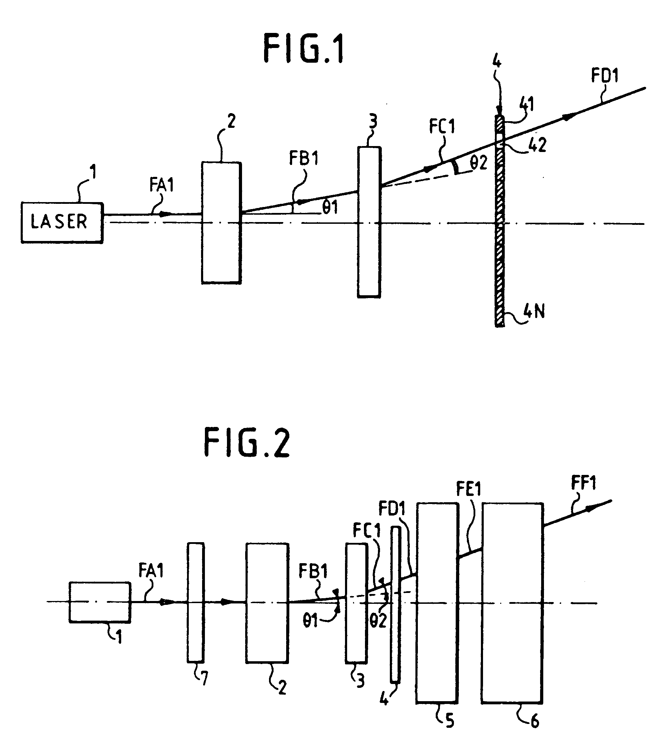

En se reportant à la figure 1, on va tout d'abord décrire un exemple de réalisation d'un dispositif de contrôle de la direction d'un faisceau selon l'invention. Ce dispositif de contrôle comporte une source laser 1 émettant un faisceau lumineux FA1 vers un dispositif de déflexion 2. Ce dispositif de déflexion 2 dévie faiblement le faisceau FA1 et fournit un faisceau FB1 faisant un angle $\theta 1$ avec le faisceau FA1. Sur la figure 1, cette déviation a été accentuée pour qu'elle soit visible. Le faisceau FB1 est transmis à un multiplexeur holographique fournissant, pour chaque angle de déviation $\theta 1$, plusieurs faisceaux, dont un seul faisceau FC1, a été représenté. Ces faisceaux font des angles $(\theta 2)$ différents par rapport à la direction du faisceau FB1. Un réseau 4 d'obturateurs comportant une série d'obturateurs 41 à 4N reçoit les faisceaux lumineux tel que FC1. L'ouverture de l'un des obturateurs sélectionne le passage de l'un des faisceaux. Par exemple, l'obturateur 42 étant ouvert, le faisceau FC1 est transmis sous la forme du faisceau FD1.

A titre d'exemple, le dispositif de déflexion 2 peut réaliser une déflexion atteignant +2 degré avec une résolution de nxn = $10^2 \times 10^2$ à $10^3 \times 10^3$. Cette déflexion est alors obtenue par :

- une déflexion acousto-optique du faisceau en X-Y ;
- un réseau de déphaseurs électrooptiques assurant une déflexion contrôlée du faisceau (antenne à balayage électrooptique).

Le multiplexeur holographique 3 est constitué par un élément optique holographique générant une matrice de NxN points à partir de l'une quelconque des directions issues du dispositif de déflexion 2. Le dispositif de déflexion permettant d'obtenir nxn directions de faisceaux différentes et chaque direction de faisceau pouvant donner lieu à NxN directions telle que FC1, le nombre de directions possibles à la sortie du multiplexeur holographique est (nxn) (NxN). Si NxN peut atteindre $10^2 \times 10^2$, le nombre totale de directions à la sortie peut être de $10^8$ à $10^{10}$.

Le réseau d'obturateurs 4 peut être réalisé sous la forme d'une matrice à cristal liquide ou par électroabsorption dans des matériaux semiconducteurs (Si, GaAs MQW...).

Suivant les matériaux utilisés, les temps de commutation varient de quelques 10 $\mu$s (cristaux liquides ferroélectriques) à quelques ns (semiconducteurs). Le nombre d'obturateurs est NxN = $10^2 \times 10^2$ par exemple.

Chaque obturateur peut être contrôlé individuellement par l'intermédiaire d'électrodes de lignes et de colonnes. L'ouverture d'un obturateur électro-optique permet de transmettre une direction du faisceau issu du déflecteur, les $N^2-1$ autres directions étant arrêtées.

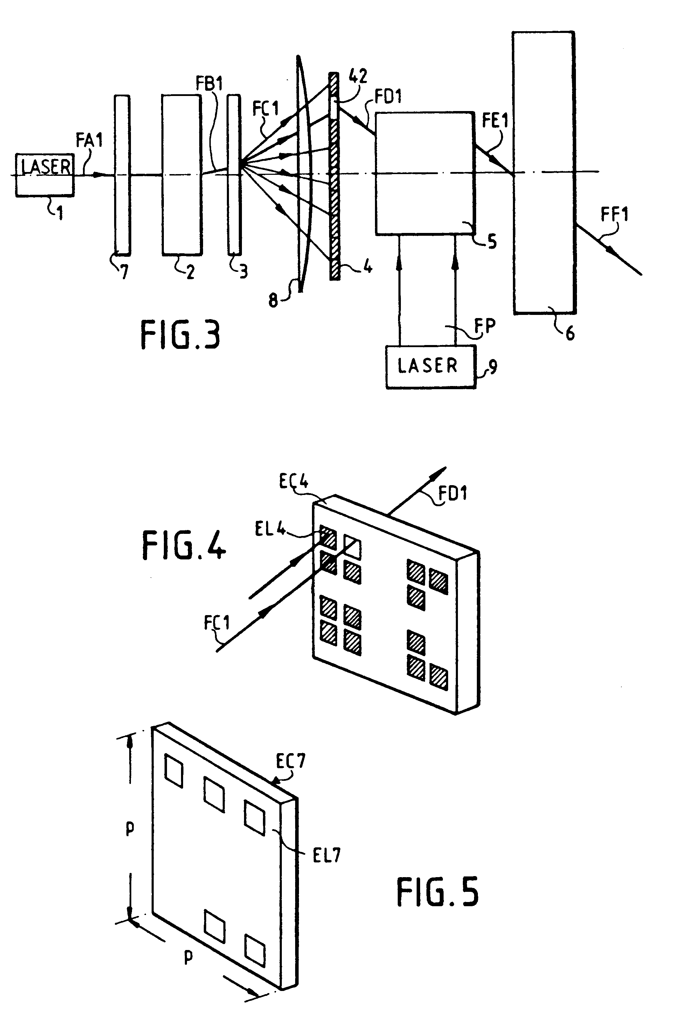

La figure 4 représente un exemple de réalisation d'un tel réseau d'obturateurs comportant un dispositif électrooptique 4 commandé par des électrodes de lignes EL4 et des électrodes de colonnes EC4.

La figure 2, représente un exemple de réalisation plus détaillé du dispositif de l'invention.

Par rapport à celui de la figure 1, le dispositif de la figure 2 comporte, en plus, un correcteur de phase 7 situé entre la source 1 et le dispositif de déviation 2.

Ce correcteur de phase est constitué, par exemple, comme cela est représenté en figure 5, d'un réseau à deux dimensions de déphaseurs électro-optiques contrôlés individuellement sous l'action de tension appliquées à chaque élément de la matrice. Chaque élément induit sur la surface d'onde un déphasage variable compris entre 0 et 2 $\Pi$ et la distribution spatiale de la loi de phase est -$\phi(x,y)$ . $\overset{+}{\phi}(x,y)$ est le déphasage résultant de la turbulence atmosphérique et des aberrations géométriques dans le champ angulaire de l'optique de sortie du système. Cette loi de phase est connue (aberrations géométrique) ou mesurée dans un dispositif interférométrique annexe. (turbulence...). Ce modulateur spatial de phase fonctionnant en transmission ou réflexion peut être constitué par :

- un réseau de modulateurs de phase électrooptique : cristaux liquides, $LiNbO_3$, PLZT...,

commandables sous l'action d'électrodes lignes et colonnes ;
- un réseau de miroirs piézo-électriques.

L'onde transmise (ou réfléchie) est donc affectée de la loi de phase -$\phi(x,y)$ ce qui en sortie de télescope assure la génération d'une onde limitée par diffraction exempte d'aberrations géométriques.

Le dispositif de la figure 2 comporte également, en supplément, en sortie du dispositif, un moyen d'amplification ou amplificateur d'onde 5 et une optique de sortie 6 tel qu'un télescope.

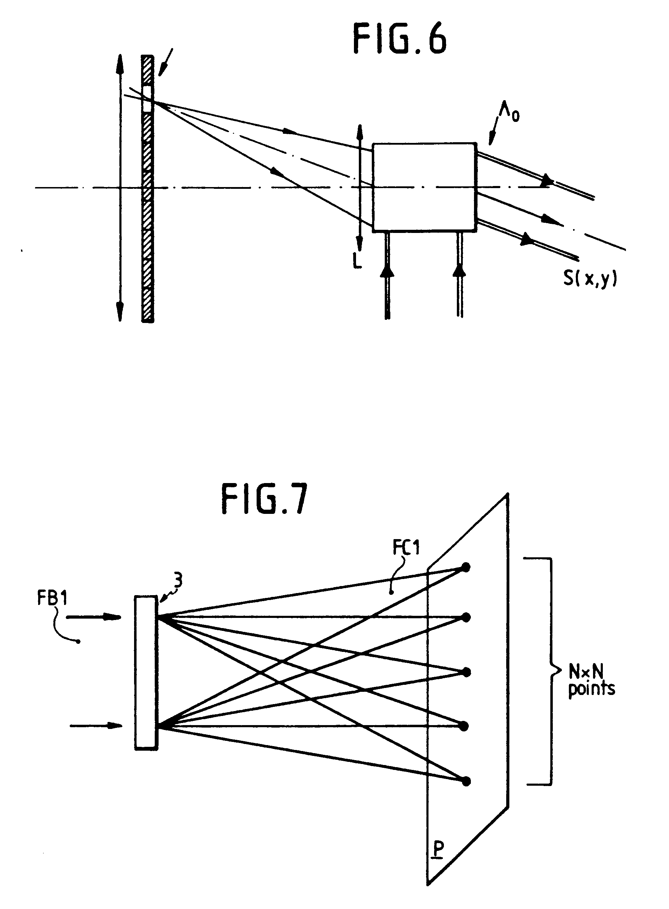

L'amplificateur d'onde 5 permet d'amplifier chaque onde dont la direction angulaire a été sélectionnée par l'intermédiaire du réseau d'obturateurs 4. Cette amplification se fait par mélange à deux ondes dans un milieu non linéaire. Un exemple de réalisation d'un tel amplificateur est représenté en figure 6.

L'amplificateur 5 reçoit l'onde à amplifier FD1 et une onde de pompe FB.

Le gain reçu par transfert d'énergie de l'onde pompe vaut :

$$\frac{I_T}{I_S} = \exp\left[\Gamma - \alpha\right]\ell$$

avec :
$\ell$ :      longueur d'interaction du milieu
$\Gamma$ :      coefficient de gain
$\alpha$ :      coefficient d'absorption

Pour une valeur suffisamment élevée du produit $\Gamma\ell$, toute l'énergie incidente du faisceau pompe peut être transférée sur la direction du faisceau signal. Des gains élevés sont effectivement obtenus ( $\Gamma\ell \simeq 10$ à 20) à partir des effets suivants :

- effets photoréfractifs dans les cristaux électrooptiques ($BaTiO_3$ ; $Bi_{12}$ $SiO_{20}$ - $BNbO_3$ - $LiNbO_3$...)
- effets Brillouin stimulées.

Ces effets non linéaires permettant l'amplification efficace d'une onde signal dans un champ angulaire de 60°. Avec la configuration indiquée sur la figure 5, le pas moyen de strates du réseau dynamique vaut :

$$\Lambda_o \simeq \frac{\lambda}{2n_o} \times \frac{2}{\sqrt{2}}$$

si on a :

$n_o = 2,5$; $\lambda = 0,5$ $\mu$m
On obtient : $\Lambda_o = 0,15$ $\mu$m

Ces réseaux à très haute fréquence spatiale sont enregistrés à champ nul, par effet de diffusion des porteurs dans les cristaux photoréfractifs qui présentent un gain élevé dans ce domaine de fréquence ($BaTiO_3$ - $LiNbO_3$...).

Le faisceau amplifié dans un grand champ angulaire (typiquement ± 60°) sert à l'illumination de l'objectif visé après passage dans un système optique du type téléscope (diamètre du faisceau en sortie du teléscope $\phi$ > 1m).

Comme représenté en figure 7, la multiplexeur holographique 3 est enregistré pour assurer une multiplication d'une direction angulaire quelconque d'un faisceau FB1 et issue du dispositif de déflexion 2, en une matrice de NxN points situés dans un plan P. Sur la figure 7, pour simplifier, on n'a représenté qu'une ligne de points de la matrice de NxN points.

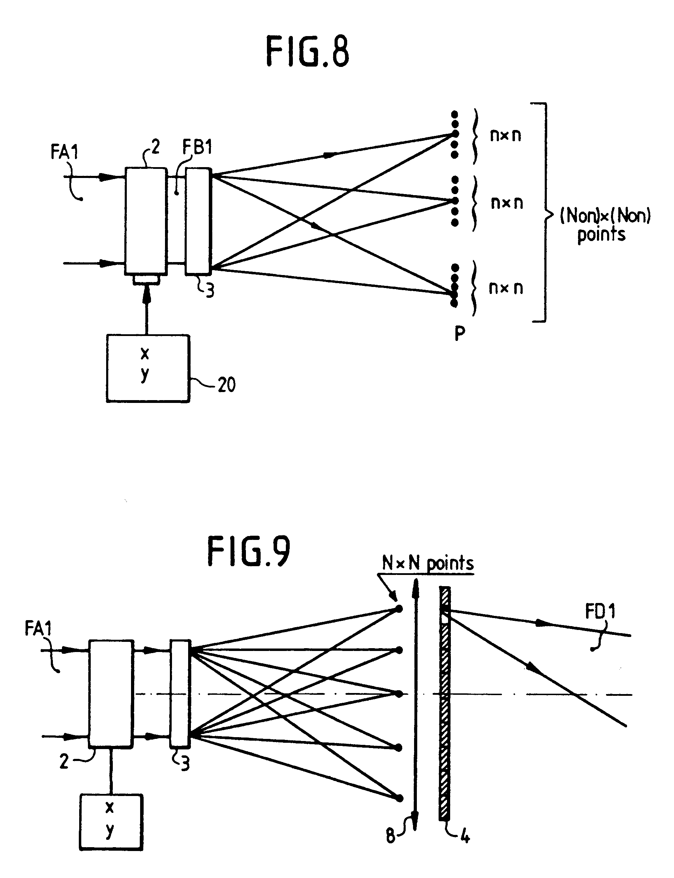

La figure 3, illustre de façon plus complète le dispositif de l'invention. Sur cette figure on retrouve les mêmes éléments que dans la figure 2 avec, en plus, une lentille de focalisation 8. En liaison avec cette figure et avec les figures 8 et 9 on va décrire le fonctionnement du dispositif de l'invention.

La source laser 1 émet un faisceau lumineux FA1. Le modulateur spatial 7 permet une correction locale de la phase de la surface d'onde en fonction des distorsions des systèmes optiques que traverse le faisceau lumineux jusqu'à sa sortie du téléscope 6.

Ce dispositif de déflexion 2 assure une déflexion angulaire du faisceau et cela en fonction d'un signal radio-fréquence appliqué par un générateur électrique 20 au dispositif 2.

Le multiplexeur holographique 3 reçoit le faisceau FB1 et forme dans un plan P un nombre de points dont le nombre est NxN. Le dispositif de déflexion 2 pouvant fournir nxn déflexions angulaires différentes, le nombre de points pouvant être formé dans le plan P est donc $N^2.n^2$.

Chaque point parmi les NxN points formés à partir de la déviation fournie par le dispositif 2 détermine une direction angulaire. Pour une déviation déterminée du dispositif 2, on a donc NxN directions angulaires.

Comme cela est représenté en figure 9, le réseau d'obturateurs 4 sélectionne la direction déterminée par un seul point. Le faisceau est ensuite amplifié par l'amplificateur 5 recevant une onde de pompe d'une source laser 9. Il est ensuite transmis au système optique de sortie (télescope) 6.

Le dispositif de contrôle de la direction d'un faisceau qui vient d'être décrit peut être réalisé à titre d'exemple avec les caractéristiques suivantes :
- Déflexion du faisceau dans ± 60°
- Diamètre du faisceau $\phi$ = 5 cm
- Longueur d'onde$\lambda$ = 1,06 $\mu$m
- Nombre de positions angulaires résolues = $10^5$

- Correcteur de phase : pxp = $10^2$x$10^2$
- Nombre de positions résolues résolues par le déflecteur 2D (cellule de Bragg acousto-optique $TeO_2$)

nxn = $10^3$x$10^3$

- Multiplexeur holographique

NxN = $10^2$x$10^2$

- Matrice d'obturateurs

NxN = $10^2$x$10^2$

- Pertes dues à la dispersion angulaire du faisceau par le multiplexeur = 40 dB.
- Gain du milieu amplificateur pour compenser les pertes sur l'onde signal G>40 dB obtenu avec les conditions suivantes :
    $\Gamma$ =    10 $cm^{-1}$ ($BaTiO_3$)
    $\ell$ =    1 $cm^{-1}$
    $\alpha$ =    O.1 $cm^{-1}$.
- Temps d'établissement de la non linéarité :
    $\tau \simeq$ 1 ms pour Ip = 100 $W.cm^{-2}$.

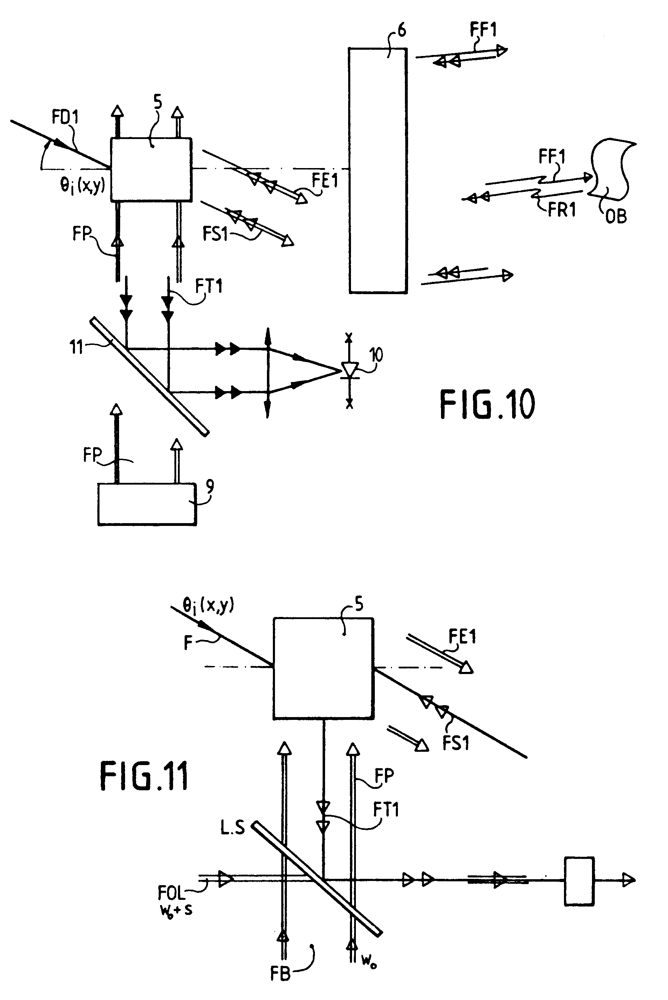

En se reportant à la figure 10, on va décrire maintenant une application du dispositif à un système de détection.

Ce système de détection comporte tous les éléments du dispositif de contrôle angulaire d'un faisceau lumineux selon l'invention. Sur la figure 10, on n'a représenté uniquement que l'amplificateur 5 et la source laser 9 émettant le faisceau pompe ainsi que le système optique de sortie 6. Le système de détection comporte en outre un dispositif de détection optique 10, telle qu'une photodiode, couplé par une lame semi-réfléchissante 11 au faisceau pompe FP.

Le dispositif selon l'invention émet, comme cela a été précédemment décrit, un faisceau FF1, selon une direction déterminée. Ce faisceau est réfléchi par un objet OB sous la forme d'un faisceau FR1. L'optique 6 retransmet un faisceau FS1, de même direction que le faisceau FE1, au milieu applicateur 5. Ce faisceau est diffracté par le réseau de phase dynamique du milieu 5 dans la direction du faisceau pompe. Un faisceau FT1 est retransmis par la lame semi-réfléchissante 11 vers le dispositif de détection optique 10.

Le dispositif de l'invention auquel on a associé le dispositif de détection 10 couplé au faisceau pompe 10 a donc permis d'effectuer la détection de l'objet OB éclairé par le faisceau FF1.

Cette détection peut se faire avec un seul dispositif de détection. De plus, avec les possibilités de contrôle angulaire du faisceau émis, il est possible d'effectuer un balayage et de détecter un objet se trouvant dans le champ de balayage du dispositif.

De plus comme cela est représenté en figure 11, la détection peut être hétérodyne. Pour cela, on prévoit un faisceau lumineux FOL dérivé, par des moyens non représentés, du faisceau pompe (fréquence $\omega_o$) translaté en fréquence $(\omega_o + \delta)$. La détection est du type hétérodyne après battement du faisceau FOL et du faisceau retour FT1.

On voit donc que le dispositif de l'invention présente notamment les avantages suivants.

- Contrôle de la direction du faisceau dans un champ angulaire important (par exemple ± 60°).
- Correction du front d'onde pour chaque direction augulaire sélectionnée par l'intermédiaire d'un modulateur spatial 2D.
- Amplification sélective de la direction angulaire choisie par un milieu non linéaire.
- Détection du signal de retour sur un récepteur unique quelle que soit la direction du faisceau.

Il est bien évident que la description qui précède n'a été faite qu'à titre d'exemple.

Les valeurs numériques notamment n'ont été fournies que pour illustrer la description.

D'autres variantes peuvent être envisagées sans sortir du cadre de l'invention.

## Revendications

1. Dispositif de contrôle de la direction d'un premier faisceau lumineux (FA1) émis par une source laser (1) comportant les différents éléments successifs suivants, alignés selon la direction de ce premier faisceau lumineux (FA1) :
   - un dispositif de déflexion commandé (2) à faible déviation recevant le premier faisceau lumineux (FA1) et transmettent un deuxième faisceau (FB1) selon une deuxième direction choisie parmi plusieurs directions faisant un angle (01) par rapport à la direction du premier faisceau (FA1) ;
   - un multiplexeur holographique (3) comportant un élément optique holographique (31, 3N) générant plusieurs troisièmes faisceaux (FC1) à partir d'un faisceau (FB1) selon ladite deuxième direction, dont les directions sont fonction de ladite deuxième direction ;
   caractérisé en ce qu'il comportant également :
   - des obturateurs (41 à 4N) à ouverture-fermeture commandée, placés chacun sur une direction possible desdits troisièmes faisceaux (FC1) et permettant de choisir la transmission d'un ou plusieurs troisièmes faisceaux (FD1) déterminés.

2. Dispositif de contrôle de la direction d'un faisceau selon la revendication 1, caractérisé en ce que le dispositif de déflexion commandé (2) est un dispositif à déflexion acousto-optique.

3. Dispositif de contrôle de la direction d'un faisceau selon la revendication 1, caractérisé en ce que le dispositif de déflexion commandé (2) est un réseau de déphaseurs électrooptique.

4. Dispositif de contrôle de la direction d'un faisceau selon la revendication 1, caractérisé en ce que les obturateurs (41 à 4N) sont réalisés à l'aide d'un écran à cristal liquide commandé par un réseau d'électrodes de colonnes et un réseau d'électrodes de lignes, chaque intersection entre une électrode de colonne et une électrode de ligne constituant un obturateur.

5. Dispositif de contrôle de la direction d'un faisceau selon la revendication 1, caractérisé en ce que les obturateurs (41 à 4N) sont réalisés à l'aide d'une couche d'un matériau à électroabsorption commandé électriquement par des électrodes de lignes et des électrodes de colonnes.

6. Dispositif de contrôle de la direction d'un faisceau selon la revendication 1, caractérisé en ce que le dispositif de déflexion (2) est arrangé selon une ligne de façon à permettre une déflexion angulaire dans un plan.

7. Dispositif de contrôle de la direction d'un faisceau selon la revendication 1, caractérisé en ce que le dispositif de déflexion (2) est arrangé selon un plan de façon à permettre une déflexion angulaire dans l'espace.

8. Dispositif de contrôle de la direction d'un faisceau selon la revendication 1, caractérisé en ce qu'il comporte en outre, un amplificateur (5) de faisceau lumineux placé à la sortie des obturateurs (41 à 4N).

9. Dispositif de contrôle de la direction d'un faisceau selon la revendication 8, caractérisé en ce que l'amplificateur (5) est un dispositif amplificateur à cristal photoréfractif recevant le faisceau (FD1) issu des obturateurs et un faisceau pompe d'amplificateur (FP).

10. Dispositif de contrôle de la direction d'un faisceau selon la revendication 1, caractérisé en ce qu'il comporte en outre un correcteur de phase (7) placé sur le trajet du faisceau provenant de la source laser (1) et réglé de façon à contre-balancer les distorsions de phase dues aux différents éléments optiques du dispositif de contrôle.

11. Dispositif de contrôle de la direction d'un faisceau selon la revendication 1, caractérisé en ce qu'il comporte en outre un système optique (6) de sortie du faisceau placé à la sortie du dispositif de contrôle.

12. Dispositif de détection comprenant le dispositif de contrôle selon la revendication 9, caractérisé en ce qu un dispositif de détection optoélectronique (10) est couplé à l'amplificateur (5) par une lame semi-réfléchissante (11) de façon à recevoir un faisceau lumineux de détection (FT1) provenant de l'extérieur du dispositif, ce faisceau ayant été diffracté dans l'amplificateur (5) et réfléchi par la lame semi-réfléchissante (11).

13. Dispositif de détection selon la revendication 12, caractérisé en ce qu'un faisceau lumineux de fréquence décalée de celle de l'onde, de pompe est mélangé au faisceau lumineux de détection (FT1) de façon à réaliser une détection hétérodyne.

14. Dispositif de contrôle selon la revendication 1, caractérisé en ce que le nombre d'obturateurs (41 à 4N) est égal au nombre (N x N) de troisièmes faisceaux (FC1) générés à partir d'un faisceau (FB1) selon la deuxième direction.

15. Dispositif de contrôle selon la revendication 1, caractérisé en ce que le nombre d'obturateurs (41 à 4N) est égal au nombre (N x N) de troisièmes faisceaux (FC1) générés à partir d'un faisceau (FB1) selon la deuxième direction multiplié par le nombre (n x n) de deuxièmes directions.

Claims

1. Device for controlling the direction of a first light beam (FA1) emitted by a laser source (1) comprising the following various successive elements aligned with the direction of this first light beam (FA1):
   - a controlled deflection device (2) with low deviation receiving the first light beam (FA1) and transmitting a second beam (FB1) in a second direction chosen from several directions making an angle (01) with respect to the direction of the first beam (FA1);

   - a holographic multiplexer (3) comprising a holographic optical element (31, 3N) generating several third beams (FC1) from a beam (FB1) in said second direction, whose directions depend on the said second direction;
   characterised in that it also comprises:
   - occluders (41 to 4N), with controlled opening-closing, each placed in a possible direction of the said third beams (FC1) and allowing a choice of the transmission of one or more specified third beams (FD1).

2. Device for controlling the direction of a beam according to Claim 1, characterised in that the controlled deflection device (2) is an acousto-optical deflection device.

3. Device for controlling the direction of a beam according to Claim 1, characterised in that the controlled deflection device (2) is an array of electro-optical phase-shifters.

4. Device for controlling the direction of a beam according to Claim 1, characterised in that the occluders (41 to 4N) are produced with the aid of a liquid crystal screen controlled by an array of column electrodes and an array of row electrodes, each intersection between a column electrode and a row electrode constituting an occluder.

5. Device for controlling the direction of a beam according to Claim 1, characterised in that the occluders (41 to 4N) are produced with the aid of a layer of an electroabsorption material controlled electrically by row electrodes and column electrodes.

6. Device for controlling the direction of a beam according to Claim 1, characterised in that the deflection device (2) is arranged along a row so as to allow an angular deflection in a plane.

7. Device for controlling the direction of a beam according to Claim 1, characterised in that the deflection device (2) is arranged in a plane so as to allow an angular deflection in space.

8. Device for controlling the direction of a beam according to Claim 1, characterised in that it further comprises a light beam amplifier (5) placed at the exit of the occluders (41 to 4N).

9. Device for controlling the direction of a beam according to Claim 8, characterised in that the amplifier (5) is a photorefractive crystal amplifier device receiving the beam (FD1) emanating from the occluders and an amplifier pump beam (FP).

10. Device for controlling the direction of a beam according to Claim 1, characterised in that it further comprises a phase corrector (7) placed in the path of the beam originating from the laser source (1) and adjusted so as to counterbalance the phase distortions due to the various optical elements of the control device.

11. Device for controlling the direction of a beam according to Claim 1, characterised in that it further comprises an optical system (6) for exit of the beam, placed at the exit of the control device.

12. Detection device including the control device according to Claim 9, characterised in that an opto-electronic detection device (10) is coupled to the amplifier (5) by a semi-reflective plate (11) so as to receive a luminous detection beam (FT1) originating from outside the device, this beam having been diffracted in the amplifier (5) and reflected by the semi-reflective plate (11).

13. Detection device according to Claim 12, characterised in that a light beam with frequency offset from that of the wave, for pumping is mixed with the luminous detection beam (FT1) so as to produce a heterodyne detection.

14. Control device according to Claim 1, characterised in that the number of occluders (41 to 4N) is equal to the number (N x N) of third beams (FC1) generated from a beam (FB1) in the second direction.

15. Control device according to Claim 1, characterised in that the number of occluders (41 to 4N) is equal to the number (N x N) of third beams (FC1) generated from a beam (FB1) in the second direction, multiplied by the number (n x n) of second directions.

**Patentansprüche**

1. Vorrichtung zur Steuerung der Richtung eines ersten Lichtstrahls (FA1), der von einer Laserquelle (1) ausgeht, mit den folgenden verschiedenen und entlang der Richtung des ersten Lichtstrahls (FA1) angeordneten Bauteilen:
  - eine gesteuerte Ablenkvorrichtung (2) geringer Ablenkwirkung, die den ersten Lichtstrahl (FA1) empfängt und einen zweiten Lichtstrahl (FB1) entlang einer zweiten Richtung aussendet, die aus mehreren Richtungen ausgewählt ist und einen Winkel (Θ1) mit der Richtung des ersten Strahls (FA1) einschließt,
  - einem Holographie-Multiplexer (3) mit einem holographischen optischen Element (31, 3N), der mehrere dritte Strahlen (FC1) ausgehend von einem Strahl (FB1) gemäß der zweiten Richtung erzeugt, wobei die Richtungen der dritten Strahlen von der zweiten Richtung abhängig sind, dadurch gekennzeichnet, daß außerdem Verschlußorgane (41 bis 4N) vorgesehen sind, deren Öffnen und Schließen gesteuert wird und die je in einer möglichen Richtung der dritten Strahlen (FC1) liegen und einen oder mehrere bestimmte dritte Strahlen (FD1) wählbar durchlassen können.

2. Vorrichtung zur Steuerung der Richtung eines Strahls nach Anspruch 1, dadurch gekennzeichnet, daß die gesteuerte Ablenkvorrichtung (2) eine akusto-optische Ablenkvorrichtung ist.

3. Vorrichtung zur Steuerung der Richtung eines Strahls nach Anspruch 1, dadurch gekennzeichnet, daß die gesteuerte Ablenkvorrichtung (2) ein elektro-optisches Phasenverschiebungsnetz ist.

4. Vorrichtung zur Steuerung der Richtung eines Strahls nach Anspruch 1, dadurch gekennzeichnet, daß die Verschlußorgane (41 bis 4N) mit Hilfe eines Flüssigkristallschirms realisiert sind, der von einem Satz von Spaltenelektroden und einem Satz von Zeilenelektroden gesteuert wird, wobei jeder Schnittpunkt zwischen einer Spalten- und einer Zeilenelektrode ein Verschlußorgan bildet.

5. Vorrichtung zur Steuerung der Richtung eines Strahls nach Anspruch 1, dadurch gekennzeichnet, daß die Verschlußorgane (41 bis 4N) mit Hilfe einer Schicht eines Elektro-Absorptionsmaterials realisiert werden, das elektrisch von Zeilen- und Spaltenelektroden gesteuert wird.

6. Vorrichtung zur Steuerung der Richtung eines Strahls nach Anspruch 1, dadurch gekennzeichnet, daß die Ablenkvorrichtung (2) gemäß einer Linie angeordnet ist, um die Winkelablenkung in einer Ebene zu ermöglichen.

7. Vorrichtung zur Steuerung der Richtung eines Strahls nach Anspruch 1, dadurch gekennzeichnet, daß die Ablenkvorrichtung (2) gemäß einer Ebene angeordnet ist, um eine Winkelablenkung im Raum zu ermöglichen.

**8.** Vorrichtung zur Steuerung der Richtung eines Strahls nach Anspruch 1, dadurch gekennzeichnet, daß sie außerdem einen Verstärker (5) zum Verstärken des Lichtstrahls am Ausgang der Verschlußorgane (41 bis 4N) enthält.

**9.** Vorrichtung zur Steuerung der Richtung eines Strahls nach Anspruch 8, dadurch gekennzeichnet, daß der Verstärker (5) eine Verstärkervorrichtung vom photorefraktiven Kristalltyp ist, die den von den Verschlußorganen kommenden Strahl (FD1) und einen Verstärkungspumpstrahl (FP) zugeführt erhält.

**10.** Vorrichtung zur Steuerung der Richtung eines Strahls nach Anspruch 1, dadurch gekennzeichnet, daß sie außerdem einen Phasenkorrektor (7) aufweist, der in der Bahn des von der Laserquelle (1) kommenden Strahls liegt und so geregelt ist, daß er die Phasenverzerrungen aufgrund der verschiedenen optischen Elemente des Steuersystems kompensiert.

**11.** Vorrichtung zur Steuerung der Richtung eines Strahls nach Anspruch 1, dadurch gekennzeichnet, daß er außerdem ein optisches Ausgangssystem (6) für den Strahl am Ausgang des Steuervorrichtung aufweist.

**12.** Detektorvorrichtung mit einer Steuervorrichtung nach Anspruch 9, dadurch gekennzeichnet, daß eine opto-elektronische Detektorvorrichtung (10) an den Verstärker (5) über eine halbreflektierende Lamelle (11) gekoppelt ist, um einen Detektionslichtstrahl (FT1) von außerhalb der Vorrichtung zu empfangen, wobei dieser Strahl im Verstärker (5) gebeugt und an der halbreflektierenden Lamelle (11) reflektiert wurde.

**13.** Detektorvorrichtung nach Anspruch 12, dadurch gekennzeichnet, daß ein Lichtstrahl einer im Vergleich zu der Welle verschobenen Frequenz als Pumplichtstrahl mit dem Detektorlichtstrahl (FT1) gemischt wird, um eine Heterodyndetektion zu realisieren.

**14.** Vorrichtung zur Steuerung nach Anspruch 1, dadurch gekennzeichnet, daß die Anzahl von Verschlußorganen (41 bis 4N) gleich der Anzahl (N x N) von dritten Strahlen (FC1) ist, die ausgehend von einem Strahl (FB1) in der zweiten Richtung erzeugt werden.

**15.** Vorrichtung zur Steuerung nach Anspruch 1, dadurch gekennzeichnet, daß die Anzahl der Verschlußorgane (41 bis 4N) gleich der Anzahl (N x N) von dritten Strahlen (FC1) ist, die von einem Strahl (FB1) gemäß der zweiten Richtung erzeugt wurden, multipliziert mit der Anzahl (n x n) von zweiten Richtungen.

# FIG.1

# FIG.2

FIG.3

FIG.4

FIG.5

# FIG.6

# FIG.7

# FIG.8

# FIG.9

FIG.10

FIG.11